# EUROPEAN PATENT SPECIFICATION

(11) **EP 3 876 021 B1**
(45) Date of publication and mention of the grant of the patent: **06.12.2023**
(21) Application number: 20161097.9
(22) Date of filing: 05.03.2020
(51) Int. Cl.: G02B 19/00, F21S 41/153, F21S 41/20, F21S 41/663, F21S 41/143, F21S 41/255

(54) **MICRO-OPTIC FOR MICRO-LED PROJECTION UNIT**
MIKROOPTIK FÜR MIKRO-LED-PROJEKTIONSEINHEIT
MICRO OPTIQUE POUR UNE UNITÉ DE PROJECTION À MICRO DEL

(43) Date of publication of application: 08.09.2021
(73) Proprietor: Lumileds LLC, San Jose, CA 95131 (US)
(72) Inventor: SPINGER, Benno, 52068 Aachen (DE); ZOZGORNIK, Steffen, 52068 Aachen (DE)
(74) Representative: dompatent von Kreisler Selting Werner - Partnerschaft von Patent- und Rechtsanwälten mbB

(56) References cited:
- EP-A1- 2 392 968
- US-A1- 2011 116 052
- US-A1- 2018 202 624

## Description

### FIELD OF THE INVENTION

The present disclosure relates to a lighting device comprising at least first and second arrangements of light emitting elements, in particular µ-LEDs, and optical elements such that the lighting device may in particular suitably be employed for an automotive headlight application, to a lighting system comprising the lighting device and to an automotive headlight comprising the lighting device.

### BACKGROUND OF THE INVENTION

Lighting devices comprising arrangements of light emitting elements such as matrix LED arrangements have become advantageous for projector applications in general and for automotive applications, in particular for automotive headlight applications. Automotive applications include for example Adaptive Driving Beam (ADB) applications, Low Beam, High Beam, and Adaptive Front-lighting System applications.

Thereby, in particular µ-LEDs (Light Emitting Diodes) have become advantageous light sources as they enable placing individual LEDs as pixels at high spatial density and thus enable projecting images with sharply defined edges and high contrast.

US 2018/202624 relates to an optical device for projecting a pixelized light beam, in particular for a motor vehicle. The device comprises at least two matrix-arrays each equipped with primary light sources able to emit light rays and each placed in a plane that is specific thereto; at least one primary optical system associated with each matrix-array and placed downstream of the matrix-array, each primary optical system forming a virtual image of the matrix-array upstream of the latter; and an optical projecting system forming an image from the virtual images, in which image the virtual images overlap partially.

EP 2 392 968 describes a light projector. The projector has a lighting system for illuminating a pixel, e.g. infrared filter, and an imaging optics for projecting the pixel on a building surface or a building partial surface. An LED is provided as a light source of the lighting system. A lens element is arranged as a collimator lens between the pixel and the light source. The lighting system, the pixel and the imaging optics are arranged along an optical axis. The lighting system comprises an extension transverse to the optical axis, and the LEDs are arranged along a printed circuit board.

### SUMMARY OF THE INVENTION

While arrangements of light emitting elements such as matrix arrangements of µ-LEDs have thus become an advantageous choice as light source for different applications, optical systems for projecting or imaging the light sources onto a given target place such as a road surface may still be improved.

It is thus an object of the present invention to provide an improved light emitting device in particular comprising optical elements that enable an improvement in quality of an image of arrangements of light emitting elements projected onto a target plane.

According to a first aspect of the present invention, a lighting device is provided comprising at least one first arrangement of light emitting elements, at least one second arrangement of light emitting elements spatially separated from the at least one first arrangement of light emitting elements; at least one first magnifying optical element arranged in correspondence with the at least one first arrangement of light emitting elements, the at least one first magnifying optical element being arranged and configured for generating a magnified image of the at least one first arrangement of light emitting elements; at least one second magnifying optical element arranged in correspondence with the at least one second arrangement of light emitting elements, the at least one second magnifying optical element being arranged and configured for generating a magnified image of the at least one second arrangement of light emitting elements; and at least one optical projection element arranged and configured for generating a combined image of the magnified image of the at least one first arrangement of light emitting elements and the magnified image of the at least one second arrangement of light emitting elements. A focus of the at least one optical projection element is in a plane defined by the at least one first arrangement of light emitting elements and/or by the at least one second arrangement of light emitting elements.

According to a second aspect of the present invention, a lighting system is provided comprising a lighting device according to the first aspect, and a controller configured for individually controlling light emitting elements of the at least one first arrangement of light emitting elements and/or of the at least one second arrangement of light emitting elements.

According to a third aspect of the present invention, an automotive headlight is provided comprising the lighting device according to the first aspect.

Exemplary embodiments of the first, the second and the third aspect of the invention may have one or more of the properties described below.

In an exemplary embodiment, a light emitting element corresponds to or comprises a light emitting diode (LED). In particular, in an exemplary embodiment, a light emitting element corresponds to or comprises a µ-LED or micro-LED. In other words, in an exemplary embodiment, a size, e.g. an edge length or a length of a diagonal of the LED is in between 10 and 80 µm, in particular in between 20 and 60 µm, in particular in between 30 and 50 µm. In this way, individual LEDs advantageously function as individual pixels within the arrangements of light emitting elements. In addition, the small size of such pixels allows for a high pixel density, which in turn enables generation of sharp images producible by the lighting device with particular high contrast. It is further noted that the provision of individual arrangements of light emitting elements turned out to be of advantage in terms of yield in particular if individual chips corresponding to such arrangement are large (for example, larger than 1-4 mm²). In addition, use of individual arrangements or chips advantageously enables customization of the lighting device in accordance with environments at which the lighting device is to be installed.

In an exemplary embodiment, the light emitting elements of the at least one first arrangement of light emitting elements and/or the at least one second arrangement of light emitting elements are configured to be individually addressable and/or addressable in groups. In other words, in an exemplary embodiment, the light emitting elements are individually connectable to a corresponding controller for individually controlling each one of the light emitting elements and/or groups of the light emitting elements. In this embodiment, the lighting device is in particular advantageously employable as or in connection with an automotive headlight as the possibility to individually address/control individual pixels and/or pixel groups advantageously enables controlling a shape of an image generated by the lighting device to adapt such image, e.g. a light distribution projected onto a road, to particular situations, e.g. to driving conditions of a car comprising the lighting device as headlight.

In an exemplary embodiment, one, more or all of the light emitting elements are configured to emit light of color suitable for an automotive headlight, in particular white light. While such embodiment is of particular advantage for an automotive headlight application, in an alternative embodiment one, more or all of the light emitting elements are configured to emit light of a predefined color, e.g. r, green and/or blue light. For example, in this embodiment, each of the light emitting elements comprises a triplet of LEDs, one LED of the triplet configured to emit red light, one LED of the triplet configured to emit green light, and one LED of the triplet configured to emit blue light. Thereby, in an exemplary embodiment, each LED of the triplet is configured to be individually controlled, e.g. may be individually connectable to a corresponding controller, such that an image generated by the lighting device may be controlled not only in shape but additionally also in color.

In an exemplary embodiment, the at least one first arrangement of light emitting elements and/or the at least one second arrangement of light emitting elements corresponds to or comprises a matrix arrangement of the light emitting elements. In a matrix arrangement, light emitting elements are arranged along respective rows and columns forming an essentially regular two-dimensional arrangement. In an exemplary embodiment, the at least one first arrangement of light emitting elements and/or the at least one second arrangement of light emitting elements corresponds to or comprises a µLED chip.

In an exemplary embodiment, a µLED Chip corresponds to or comprises at least one array of individual addressable LED junctions arranged on a common substrate. For example, the substrate corresponds to or comprises in an exemplary embodiment a CMOS chip and a transistor of the CMOS chip is arranged underneath each LED junction a transistor. In this way, it becomes possible to individually control LEDs of the µLED arrangement in this preferred embodiment, by controlling the respective transistors. Further, in an exemplary embodiment, individual µLEDs (µLED pixels) can be formed using a structured monolithic element. In an exemplary embodiment, a small cavity is formed around each junction/pLED to avoid crosstalk between the µLEDs/pixels.

In an exemplary embodiment, the at least one second arrangement of light emitting elements is spatially separated from the at least one first arrangement of light emitting elements by a gap. Thereby, the gap has a (for example constant) width that is larger than a width of a gap separating a first light emitting element of the at least one first arrangement and/or of the at least one second arrangement from a second light emitting element of the at least one first arrangement and/or of the at least one second arrangement arranged adjacent to the first light emitting element. For example, a gap between individual light emitting elements may be on the order of less than a few µm, in an exemplary embodiment less than 20 µm, in particular less than 10 µm. Further, in an exemplary embodiment, a gap between the at least one first arrangement of light emitting elements and the at least one second arrangement of light emitting elements is in between 80 µm and 120 µm, in particular in between 90 mm and 110 µm, in particular about 100 µm. In other words, the lighting device may comprise arrangements of light emitting elements, e.g. of µLEDs, which are arranged at a particularly high density thereby allowing for example for generation of smooth edges of an image e.g. of a headlight projected onto a road, the gaps between individual pixels being small as compared to a gap present between individual arrangements (e.g. chips) of light emitting elements.

In an exemplary embodiment, the at least one first magnifying optical element being arranged in correspondence with the at least one first arrangement of light emitting elements, in an exemplary embodiment, a center of the at least one first arrangement of light emitting elements is aligned with and/or arranged at an optical axis of the at least one first magnifying optical element. Accordingly, in an exemplary embodiment, the at least one second magnifying optical element being arranged in correspondence with the at least one second arrangement of light emitting elements, in an exemplary embodiment, a center of the at least one second arrangement of light emitting elements is aligned with and/or arranged at an optical axis of the at least one second magnifying optical element. By aligning the first and second optical elements with the corresponding arrangements of light emitting elements in this way, image imperfections in corresponding magnified images of the corresponding arrangements of light emitting elements can be advantageously minimized.

In an exemplary embodiment, the at least one first magnifying optical element and/or the at least one second magnifying optical element is or comprises a lens element, in particular an at least partially convex lens element. Thus, the at least one first and/or second magnifying optical element is configured to magnify an image of the corresponding first and/or second arrangement of light emitting elements. In this way, the at least one first and/or second magnifying optical element advantageously compensates for the gap present between the first and/or second arrangements of light emitting elements. In other words, if for example the first and/or second arrangements of light emitting elements would be imaged for example using a single common projecting element without the first and/or second magnifying optical elements, the gap present between the first and/or second arrangement of light emitting elements would be imaged as well thus potentially causing an undesirable deterioration of an image of the arrangements of light emitting elements. By employing the at least one first and the at least one second magnifying optical elements, this gap can be advantageously compensated for, thus advantageously improving an image of the arrangements of light emitting elements.

In an exemplary embodiment, the at least one optical projection element corresponds to or comprises a single lens or a lens system arranged to collect light emitted from all light emitting elements of the at least one first and the at least one second arrangement of light emitting elements. In this way, the optical projection element is advantageously configured for generating a combined image of the magnified images of the arrangements of light emitting elements.

In an exemplary embodiment, the lighting device corresponds to or is comprised by an automotive headlight and the at least one optical projection element is arranged and configured for projecting the combined image of the magnified image of the at least one first arrangement of light emitting elements and the magnified image of the at least one second arrangement of light emitting elements onto a predefined plane, e.g. onto a road. In other words, in an exemplary embodiment, the lighting device corresponds to or is comprised by an automotive headlight and a focal distance of the at least one optical projection element is selected such that the combined image of the magnified image of the at least one first arrangement of light emitting elements and the magnified image of the at least one second arrangement of light emitting elements is projected onto a road.

In an exemplary embodiment, the lighting device further comprises at least one first arrangement of optical collimation elements, wherein each optical collimation element of the at least one first arrangement of optical collimation elements is arranged in correspondence with a corresponding light emitting element of the at least one first arrangement of light emitting elements; and at least one second arrangement of optical collimation elements, wherein each optical collimation element of the at least one second arrangement of optical collimation elements is arranged in correspondence with a corresponding light emitting element of the at least one second arrangement of light emitting elements. Thereby, in an exemplary embodiment, each optical collimation element corresponds to or comprises a lens element arranged to collimate light emitted from a corresponding light emitting element. In an exemplary embodiment, each optical collimation element corresponds to or comprises an at least partially convex lens element. In an exemplary embodiment, the light emitting elements respectively correspond to µ-LEDs and the at least one first arrangement of optical collimation elements and the at least one second arrangement of optical collimation elements respectively correspond to respective arrangements of µ-lenses. By providing the optical collimating elements, light emitted from individual light emitting elements is advantageously collimated which helps to reduce crosstalk between light emitting elements arranged mutually adjacent and thereby advantageously helps enhancing contrast between images of individual light emitting elements (pixels) of respective arrangements.

In an exemplary embodiment, the at least one first magnifying optical element, the at least one second magnifying optical element and the optical collimation elements are integrally formed. In other words, in an exemplary embodiment, the lighting device further comprises an optical member arranged in a path of light emitted from light emitting elements of the first and the second arrangement of light emitting elements. Thereby, in an exemplary embodiment, the first magnifying optical element and the second magnifying optical element are comprised by a face of the optical member facing away from the first and the second arrangement of light emitting elements. Further, in an exemplary embodiment, the at least one first arrangement of optical collimation elements and the at least one second arrangement of optical collimation elements are comprised by a face of the optical member facing the first and the second arrangement of light emitting elements.

In other words, in an exemplary embodiment, the at least one first and second magnifying optical elements and the optical collimation elements are formed from respective, mutually opposing, faces of the optical member. In this way, a particularly advantageous compact design of the light emitting element is enabled. Thereby, in an exemplary embodiment, the at least one first magnifying optical element, the at least one second magnifying optical element, one, more or each of the optical collimation elements and/or the optical member is formed from or comprises glass or silicone. It turned out that using glass is particularly advantageous in that glass enables forming corresponding elements of high precision while it may withstand high temperatures and may thus be placed in close vicinity of the arrangements of light emitting elements, which in an exemplary embodiment correspond to high power LEDs to be used for automotive headlight applications. Further, use of silicone turned out to be advantageous in that a less complex production process may be employed for producing the respective component.

Thus, in an exemplary embodiment, respective arrangements of pre-collimating µ-lenses are aligned with corresponding arrangements of µ-LED pixels. A combination with magnifying lenses aligned with respective arrangements of the µ-LEDs allows on the one hand for compensating for the gap present between respective arrangements of µ-LEDs and on the other hand contributes to an improved light output efficiency of the overall system. Thereby, the arrangements of pre-collimating µ-lenses array facing respective µ-LED pixels enable an increase in light output efficiency and enable a reduction in crosstalk between respective pixels and/or between pixel groups. The complete assembly is imaged or projected by the at least one optical projection element, e.g. a single lens or lens system. According to the invention, the focus of the at least one optical projection element is in a plane defined by the at least one first arrangement of light emitting elements and/or by the at least one second arrangement of light emitting elements, e.g. of the µ-LED arrangements. In this way, an advantageous imaging/projecting of the magnified images of the respective arrangements of light emitting elements is enabled.

In an exemplary embodiment, the lighting system according to the second aspect corresponds to or comprises an automotive headlight system and the controller corresponds to or comprises control electronics, e.g. of a car, for controlling light emitting elements of the at least one first and of the at least one second arrangements of light emitting elements. In an alternative exemplary embodiment, the lighting system according to the second aspect corresponds to or comprises a light projector system and the controller corresponds to or comprises control electronics, e.g. of a projector, for controlling light emitting elements of the at least one first and of the at least one second arrangements of light emitting elements.

It is to be understood that the presentation of embodiments of the invention in this section is merely exemplary and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and are merely intended to conceptually illustrate the structures and procedures described herein.

### BRIEF DESCRIPTION OF THE DRAWINGS

Examples of the invention will now be described in detail with reference to the accompanying drawings, in which:
- Fig. 1: exemplarily illustrates a lighting device according to an exemplary embodiment of the invention;
- Fig. 2: exemplarily illustrates magnifying optical elements and optical collimation elements according to an exemplary embodiment of the invention;
- Fig. 3A: exemplarily illustrates a result of a numerical simulation of a light distribution emitted from a lighting device; and
- Fig. 3B: exemplarily illustrates a result of a numerical simulation of a light distribution emitted from a lighting device according to an embodiment of the invention.

### DETAILED DESCRIPTION OF THE EMBODIMENTS

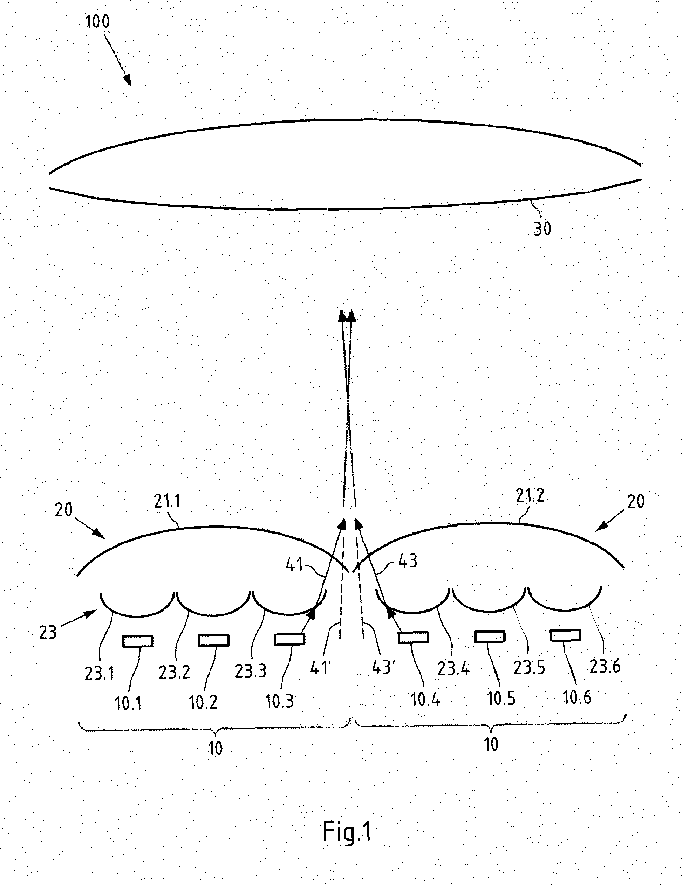

Fig. 1 is a schematic illustration of a lighting device 100 with a first arrangement 10 of LEDs 10.1, 10.2 and 10.3 (examples of light emitting elements) and a second arrangement 10 of LEDs 10.4, 10.5 and 10.6. It is noted that the cross-sectional view of Fig. 1 only shows a section along LEDs 10.1, 10.2, 10.3, 10.4, 10.5 and 10.6 which are part of respective matrix arrangements including further LEDs not visible in Fig. 1 as a result of the perspective.

A first arrangement of µ-lenses 23.1, 23.2 and 23.3 (examples of optical collimation elements) is arranged in correspondence with the first arrangement 10 of LEDs 10.1, 10.2 and 10.3 and a second arrangement of µ-lenses 23.4, 23.5 and 23.6 is arranged in correspondence with the second arrangement 10 of LEDs 10.4, 10.5 and 10.6. Collecting light from each of LEDs 10.1, 10.2 and 10.3, a first convex lens 21.1 (an example of a magnifying optical element) is arranged in correspondence with the first arrangement 10 of LEDs 10.1, 10.2 and 10.3, thereby being arranged for generating a magnified image of the first arrangement 10 of LEDs 10.1, 10.2 and 10.3 as indicated by the dashed portion of arrow 41' indicating the direction of light refracted by action of lens 21.1 as compared to arrow 41 which indicates the light path without lens 21.1. Arrows 43 and 43' illustrate the corresponding action of lens 21.2. Lens 30 (an example of an optical projection element) is arranged for collecting light emitted from the LEDs 10.1, 10.2, 10.3, 10.4, 10.5 and 10.6 of arrangements 10, and thus for generating a combined image of the magnified images of the arrangements 10 generated by lenses 21.1 and 21.2.

Thus, µ-lenses 23.1, 23.2, 23.3, 23.4, 23.5 and 23.6 act as pre-collimating optics for pre-collimating light emitted from the LEDs 10.1, 10.2, 10.3, 10.4, 10.5 and 10.6 of arrangements 10. Thereby, µ-lenses 23.1, 23.2, 23.3, 23.4, 23.5 and 23.6 help to reduce crosstalk between pairs of adjacent LEDs or between groups of LEDs and further help to increase light output efficiency of lighting device 100. Magnifying lenses 21.1 and 21.2 are used to magnify the respective arrangements 10, i.e. the complete µ-LED chips. As indicated by the dashed portions of arrows 41' and 43', lenses 21.1 and 21.2 help to fill the gap between the arrangements 10, which essentially corresponds to the distance between LEDs 10.3 and 10.4 (which in the illustrated example may correspond to approximately 100 µm, while a gap between pairs of LEDs within each arrangement 10 is approximately 20 µm. Lens 30 collects the light emitted from all light emitting elements 10.1, 10.2, 10.3, 10.4, 10.5 and 10.6 and thus images or projects images of the arrangements 10 magnified by lenses 21.1 and 21.2 onto a plane such as a road surface.

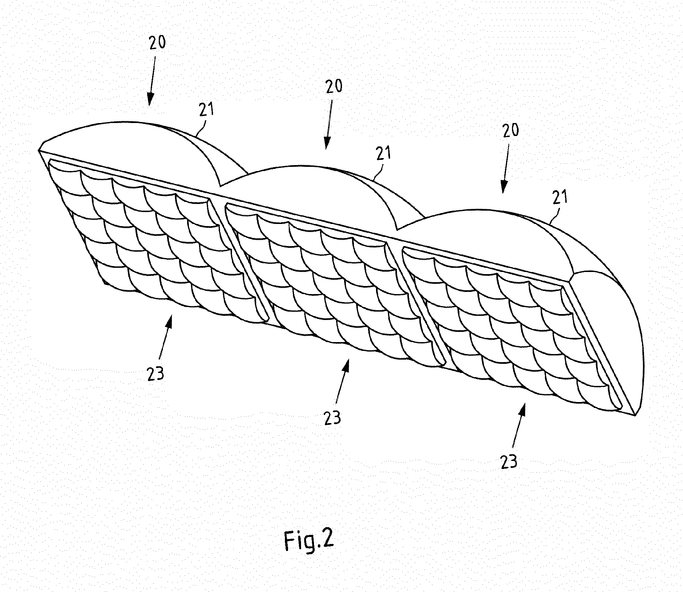

Fig. 2 illustrates three arrangements 21 of µ-lenses 23 and magnifying lenses 21 as shown in Fig. 1. As can be taken from Fig. 2, the magnifying lenses 21and the µ-lenses 23 are integrally formed. In other words, the second magnifying lenses 21 are formed from a face of optical member while µ-lenses 23 are formed from an opposing face of the optical member. As mentioned above, in particular in case where lighting device 100 is used as light source for an automotive headlight where LEDs 10.1, 10.2, 10.3, 10.4, 10.5 and 10.6 correspond to high power white light LEDs, forming the optical member from glass material turned out to be advantageous in terms of a corresponding capability to withstand heat generated by the LEDs and since therefore, the corresponding optical arrangements can be placed in close proximity to the LEDs.

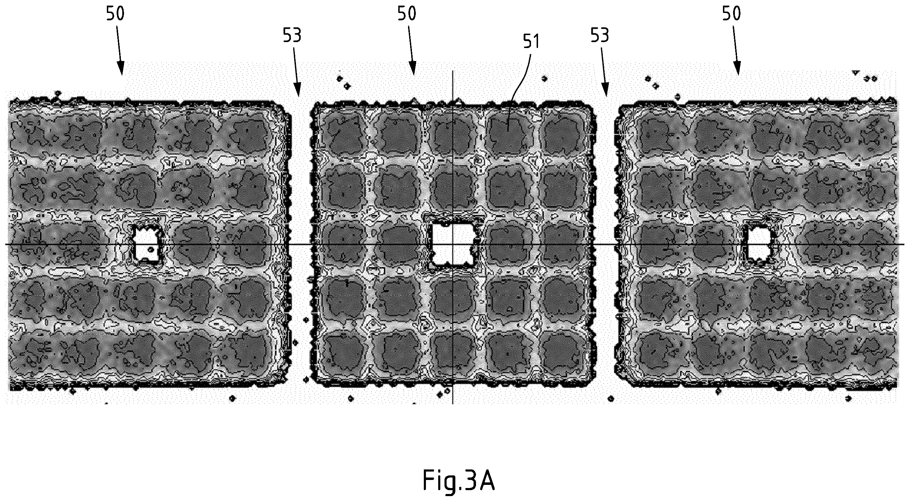

Fig. 3A illustrates a result of a numerical simulation of a light distribution emitted from a lighting device not employing any magnifying lens corresponding to magnifying lenses 21.1 and 21.2 of Fig. 1. The shown light distribution includes three images 50, including images 51 (only 1 labeled in the central image 50 of Fig. 3A) of LEDs of respective 6x6 matrix arrangements of LEDs. The light distribution of Fig. 3A is obtained by simulating the effect of pre-collimating lenses corresponding to lenses 23.1, 23.2, 23.3, 23.4, 23.5 and 23.6 of Fig. land arranged in correspondence with each LED of each one of the 6x6 arrangement of LEDs and of a projection lens corresponding to lens 30 of Fig. 1 arranged for collecting the light from each of the three 6x6 matrix arrangements of LEDs. As can be taken from Fig. 3A gaps present between the respective 6x6 matrix arrangements of LEDs are imaged as gaps 53 in the light distribution of Fig. 3A undesirably interrupting and thereby deteriorating the resulting light distribution (the projected image of the respective LED matrix arrangements).

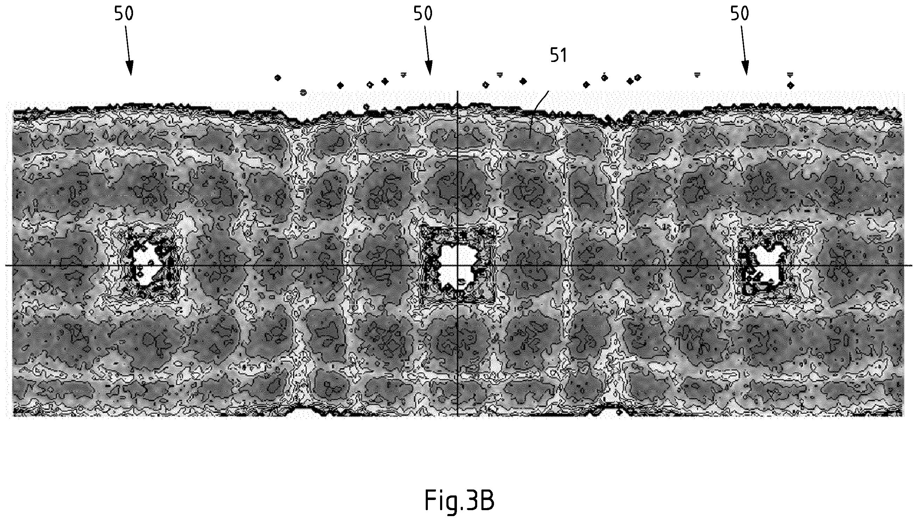

Fig. 3B illustrates a result of a numerical simulation of a light distribution emitted from a lighting device further employing magnifying lenses corresponding to magnifying lenses 21.1 and 21.2 of Fig. 1. Again, the shown light distribution includes three images 50, including images 51 (only 1 labeled in the central image 50 of Fig. 3B) of LEDs of respective 6x6 matrix arrangements of LEDs. However, as opposed to the case of Fig. 3A, as a result of the magnifying lenses (the magnifying optical elements), a gap present between the respective 6x6 matrix arrangements of LEDs is not imaged such that the deteriorating interruption of the light distribution shown in Fig. 3A is no longer present in the light distribution shown in Fig. 3B.

It is noted that a central light emitting element of each 6x6 matrix arrangement of LEDs imaged in Figs. 3A and 3B is turned off, thus illustrating the capability to individually address and control individual LEDs.

## Claims

1. A lighting device (100) comprising:
- at least one first arrangement (10) of light emitting elements (10.1, 10.2, 10.3, 10.4, 10.5, 10.6);
- at least one second arrangement (10) of light emitting elements (10.1, 10.2, 10.3, 10.4, 10.5, 10.6) spatially separated from the at least one first arrangement (10) of light emitting elements (10.1, 10.2, 10.3, 10.4, 10.5, 10.6);
- at least one first magnifying optical element (21.1) arranged in correspondence with the at least one first arrangement (10) of light emitting elements (10.1, 10.2, 10.3, 10.4, 10.5, 10.6), the at least one first magnifying optical element (21.1) being arranged and configured for generating a magnified image of the at least one first arrangement (10) of light emitting elements (10.1, 10.2, 10.3, 10.4, 10.5, 10.6);
- at least one second magnifying optical element (21.2) arranged in correspondence with the at least one second arrangement (10) of light emitting elements (10.1, 10.2, 10.3, 10.4, 10.5, 10.6), the at least one second magnifying optical element (21.2) being arranged and configured for generating a magnified image of the at least one second arrangement (10) of light emitting elements (10.1, 10.2, 10.3, 10.4, 10.5, 10.6); and
- an optical projection element (30) arranged and configured for generating a combined image of the magnified image of the at least one first arrangement (10) of light emitting elements (10.1, 10.2, 10.3, 10.4, 10.5, 10.6) and the magnified image of the at least one second arrangement (10) of light emitting elements (10.1, 10.2, 10.3, 10.4, 10.5, 10.6);
**characterized in that**
a focus of the at least one optical projection element (30) is in a plane defined by the at least one first arrangement (10) of light emitting elements (10.1, 10.2, 10.3, 10.4, 10.5, 10.6) and/or by the at least one second arrangement (10) of light emitting elements (10.1, 10.2, 10.3, 10.4, 10.5, 10.6).

2. The lighting device (100) according to claim 1, further comprising:
- at least one first arrangement of optical collimation elements (23.1, 23.2, 23.3, 23.4, 23.5, 23.6), wherein each optical collimation element of the at least one first arrangement of optical collimation elements (23.1, 23.2, 23.3, 23.4, 23.5, 23.6) is arranged in correspondence with a corresponding light emitting element of the at least one first arrangement (10) of light emitting elements (10.1, 10.2, 10.3, 10.4, 10.5, 10.6) for pre-collimating light from the at least first arrangement (10) of light emitting elements (10.1, 10.2, 10.3, 10.4, 10.5, 10.6); and
- at least one second arrangement of optical collimation elements (23.1, 23.2, 23.3, 23.4, 23.5, 23.6), wherein each optical collimation element of the at least one second arrangement of optical collimation elements (23.1, 23.2, 23.3, 23.4, 23.5, 23.6) is arranged in correspondence with a corresponding light emitting element of the at least one second arrangement (10) of light emitting elements (10.1, 10.2, 10.3, 10.4, 10.5, 10.6) for pre-collimating light from the at least second arrangement (10) of light emitting elements (10.1, 10.2, 10.3, 10.4, 10.5, 10.6).

3. The lighting device (100) according to claim 2, wherein each optical collimation element (23.1, 23.2, 23.3, 23.4, 23.5, 23.6) corresponds to or comprises a lens element arranged to collimate light emitted from a corresponding light emitting element.

4. The lighting device (100) according to any of claims 2 or 3, wherein the at least one first magnifying optical element (21.1), the at least one second magnifying optical element (21.2) and the optical collimation elements (23.1, 23.2, 23.3, 23.4, 23.5, 23.6) are integrally formed.

5. The lighting device (100) according to any of claims 2 to 4, further comprising an optical member arranged in a path of light emitted from light emitting elements of the first and the second arrangement (10) of light emitting elements (10.1, 10.2, 10.3, 10.4, 10.5, 10.6);
wherein the first magnifying optical element (21.1) and the second magnifying optical element (21.2) are comprised by a face of the optical member facing away from the first and the second arrangement (10) of light emitting elements (10.1, 10.2, 10.3, 10.4, 10.5, 10.6); and
wherein the at least one first arrangement of optical collimation elements (23.1, 23.2, 23.3, 23.4, 23.5, 23.6) and the at least one second arrangement of optical collimation elements (23.1, 23.2, 23.3, 23.4, 23.5, 23.6) are comprised by a face of the optical member facing the first and the second arrangement (10) of light emitting elements (10.1, 10.2, 10.3, 10.4, 10.5, 10.6).

6. The lighting device (100) according to any of the preceding claims, wherein the at least one first magnifying optical element (21.1), the at least one second magnifying optical element (21.2), one, more or each of the optical collimation elements (23.1, 23.2, 23.3, 23.4, 23.5, 23.6) and/or the optical member is formed from or comprises glass or silicone.

7. The lighting device (100) according to any of the preceding claims, wherein the at least one second arrangement (10) of light emitting elements (10.1, 10.2, 10.3, 10.4, 10.5, 10.6) is spatially separated from the at least one first arrangement (10) of light emitting elements (10.1, 10.2, 10.3, 10.4, 10.5, 10.6) by a gap with a width that is larger than a width of a gap separating a first light emitting element of the at least one first arrangement and/or of the at least one second arrangement from a second light emitting element of the at least one first arrangement and/or of the at least one second arrangement arranged adjacent to the first light emitting element.

8. The lighting device (100) according to any of the preceding claims, wherein the light emitting elements of the at least one first arrangement (10) of light emitting elements (10.1, 10.2, 10.3, 10.4, 10.5, 10.6) and/or the at least one second arrangement (10) of light emitting elements (10.1, 10.2, 10.3, 10.4, 10.5, 10.6) are configured to be individually addressable and/or addressable in groups.

9. The lighting device (100) according to any of the preceding claims, wherein the at least one first arrangement (10) of light emitting elements (10.1, 10.2, 10.3, 10.4, 10.5, 10.6) and/or by the at least one second arrangement (10) of light emitting elements (10.1, 10.2, 10.3, 10.4, 10.5, 10.6) corresponds to or comprises a matrix arrangement of the light emitting elements.

10. The lighting device (100) according to any of the preceding claims, wherein the optical projection element (30) corresponds to or comprises a single lens or a lens system arranged to collect light emitted from all light emitting elements of the at least one first and the at least one second arrangement (10) of light emitting elements (10.1, 10.2, 10.3, 10.4, 10.5, 10.6).

11. The lighting device (100) according to any of claims 1 to 10, wherein the light emitting elements (10.1, 10.2, 10.3, 10.4, 10.5, 10.6) respectively correspond to light emitting diodes, LEDs.

12. The lighting device (100) according to any of claims 2 to 7, wherein the light emitting elements (10.1, 10.2, 10.3, 10.4, 10.5, 10.6) respectively correspond to µ-LEDs and wherein the at least one first arrangement of optical collimation elements (23.1, 23.2, 23.3, 23.4, 23.5, 23.6) and the at least one second arrangement of optical collimation elements (23.1, 23.2, 23.3, 23.4, 23.5, 23.6) respectively correspond to respective arrangements of µ-lenses.

13. A lighting system **characterized by** a lighting device (100) according to any of claims 1 to 12, further comprising a controller configured for individually controlling light emitting elements of the at least one first arrangement (10) of light emitting elements (10.1, 10.2, 10.3, 10.4, 10.5, 10.6) and/or of the at least one second arrangement (10) of light emitting elements (10.1, 10.2, 10.3, 10.4, 10.5, 10.6).

14. Automotive headlight **characterized by** a lighting device (100) according to any of claims 1 to 12.

## Patentansprüche

1. Beleuchtungsvorrichtung (100), die aufweist:
- mindestens eine erste Anordnung (10) von lichtemittierenden Elementen (10.1, 10.2, 10.3, 10.4, 10.5, 10.6);
- mindestens eine zweite Anordnung (10) von lichtemittierenden Elementen (10.1, 10.2, 10.3, 10.4, 10.5, 10.6), die räumlich von der mindestens einen ersten Anordnung (10) von lichtemittierenden Elementen (10.1, 10.2, 10.3, 10.4, 10.5, 10.6) getrennt ist;
- mindestens ein erstes vergrößerndes optisches Element (21.1), das in Übereinstimmung mit der mindestens einen ersten Anordnung (10) von lichtemittierenden Elementen (10.1, 10.2, 10.3, 10.4, 10.5, 10.6) angeordnet ist, wobei das mindestens eine erste vergrößernde optische Element (21.1) dazu angeordnet und ausgebildet ist, ein vergrößertes Bild der mindestens einen ersten Anordnung (10) von lichtemittierenden Elementen (10.1, 10.2, 10.3, 10.4, 10.5, 10.6) zu erzeugen;
- mindestens ein zweites vergrößerndes optisches Element (21.2), das in Übereinstimmung mit der mindestens einen zweiten Anordnung (10) von lichtemittierenden Elementen (10.1, 10.2, 10.3, 10.4, 10.5, 10.6) angeordnet ist, wobei das mindestens eine zweite vergrößernde optische Element (21.2) dazu angeordnet und ausgebildet ist, ein vergrößertes Bild der mindestes einen zweite Anordnung (10) von lichtemittierenden Elementen (10.1, 10.2, 10.3, 10.4, 10.5, 10.6) zu erzeugen; und
- ein optisches Projektionselement (30) das dazu angeordnet und ausgebildet ist, ein kombiniertes Bild aus dem vergrößerten Bildes der mindestens einen ersten Anordnung (10) von lichtemittierenden Elementen (10.1, 10.2, 10.3, 10.4, 10.5, 10.6) und dem vergrößerten Bild der mindestens einen zweite Anordnung (10) von lichtemittierenden Elementen (10.1, 10.2, 10.3, 10.4, 10.5, 10.6) zu erzeugen;
**dadurch gekennzeichnet, dass**
ein Brennpunkt des mindestens einen optischen Projektionselements (30) in einer Ebene liegt, die durch die mindestens eine erste Anordnung (10) von lichtemittierenden Elementen (10.1, 10.2, 10.3, 10.4, 10.5, 10.6) und/oder durch die mindestens eine zweite Anordnung (10) von lichtemittierenden Elementen (10.1, 10.2, 10.3, 10.4, 10.5, 10.6) definiert wird.

2. Beleuchtungsvorrichtung (100) nach 1, die ferner aufweist:
- mindestens eine erste Anordnung von optischen Kollimationselementen (23.1, 23.2, 23.3, 23.4, 23.5, 23.6), wobei jedes optische Kollimationselement der mindestens einen ersten Anordnung von optischen Kollimationselementen (23.1, 23.2, 23.3, 23.4, 23.5, 23.6) in Übereinstimmung mit einem entsprechenden lichtemittierenden Element der mindestens einen ersten Anordnung (10) von lichtemittierenden Elementen (10.1, 10.2, 10.3, 10.4, 10.5, 10.6) angeordnet ist, um Licht von der mindestens einen ersten Anordnung (10) von lichtemittierenden Elementen (10.1, 10.2, 10.3, 10.4, 10.5, 10.6) im Vorfeld zu kollimieren; und
- mindestens eine zweite Anordnung von optischen Kollimationselementen (23.1, 23.2, 23.3, 23.4, 23.5, 23.6), wobei jedes optische Kollimationselement der mindestens einen zweiten Anordnung von optischen Kollimationselementen (23.1, 23.2, 23.3, 23.4, 23.5, 23.6) in Übereinstimmung mit einem entsprechenden lichtemittierenden Element der mindestens einen zweiten Anordnung (10) von lichtemittierenden Elementen (10.1, 10.2, 10.3, 10.4, 10.5, 10.6) angeordnet ist, um Licht von der mindestens einen zweiten Anordnung (10) von lichtemittierenden Elementen (10.1, 10.2, 10.3, 10.4, 10.5, 10.6) im Vorfeld zu kollimieren.

3. Beleuchtungsvorrichtung (100) nach 2, wobei jedes optische Kollimationselement (23.1, 23.2, 23.3, 23.4, 23.5, 23.6) einem Linsenelement entspricht oder ein solches aufweist, das dazu angeordnet ist, Licht zu kollimieren, das von einem entsprechenden lichtemittierenden Element emittiert wird.

4. Beleuchtungsvorrichtung (100) nach einem der Ansprüche 2 oder 3, wobei das mindestens eine erste vergrößernde optische Element (21.1), das mindestens eine zweite vergrößernde optische Element (21.2), und die optischen Kollimationselemente (23.1, 23.2, 23.3, 23.4, 23.5, 23.6) einstückig ausgebildet sind.

5. Beleuchtungsvorrichtung (100) nach einem der Ansprüche 2 bis 4, die ferner ein optisches Teil aufweist, das in einem Weg von Licht angeordnet ist, das von lichtemittierenden Elemente der ersten und zweiten Anordnung (10) von lichtemittierenden Elementen (10.1, 10.2, 10.3, 10.4, 10.5, 10.6) emittiert wird;
wobei das erste vergrößernde optische Element (21.1) und das zweite vergrößernde optische Element (21.2) in einer Fläche des optischen Teils enthalten sind, die von der ersten und zweiten Anordnung (10) von lichtemittierenden Elementen (10.1, 10.2, 10.3, 10.4, 10.5, 10.6) abgewandt ist; und
wobei die mindestens eine erste Anordnung von optischen Kollimationselementen (23.1, 23.2, 23.3, 23.4, 23.5, 23.6) und die mindestens eine zweite Anordnung von optischen Kollimationselementen (23.1, 23.2, 23.3, 23.4, 23.5, 23.6) in der Fläche des optischen Teils enthalten sind, die der ersten und zweiten Anordnung (10) von lichtemittierenden Elementen (10.1, 10.2, 10.3, 10.4, 10.5, 10.6) zugewandt ist.

6. Beleuchtungsvorrichtung (100) nach einem der vorstehenden Ansprüche, wobei das mindestens eine erste vergrößernde optische Element (21.1), das mindestens eine zweite vergrößernde optische Element (21.2), eines, mehrere oder jedes der optischen Kollimationselemente (23.1, 23.2, 23.3, 23.4, 23.5, 23.6) und/oder das optische Teil aus Glas oder Silikon hergestellt sind oder enthalten.

7. Beleuchtungsvorrichtung (100) nach einem der vorstehenden Ansprüche, wobei die mindestens eine zweite Anordnung (10) von lichtemittierenden Elementen (10.1, 10.2, 10.3, 10.4, 10.5, 10.6) räumlich von der mindestens einen ersten Anordnung (10) von lichtemittierenden Elementen (10.1, 10.2, 10.3, 10.4, 10.5, 10.6) durch einen Spalt getrennt ist, der eine Breite aufweist, die größer als eine Breite eines Spalts ist, der ein erstes lichtemittierendes Element der mindestens einen ersten Anordnung und/oder der mindestens einen zweite Anordnung von einem zweiten lichtemittierenden Element der mindestens einen ersten Anordnung und/oder der mindestens einen zweite Anordnung trennt, das angrenzend an das erste lichtemittierende Element angeordnet ist.

8. Beleuchtungsvorrichtung (100) nach einem der vorstehenden Ansprüche, wobei die lichtemittierenden Elemente der mindestens einen ersten Anordnung (10) von lichtemittierenden Elementen (10.1, 10.2, 10.3, 10.4, 10.5, 10.6) und/oder der mindestens einen zweiten Anordnung (10) von lichtemittierenden Elementen (10.1, 10.2, 10.3, 10.4, 10.5, 10.6) dazu ausgebildet sind, einzeln ansprechbar und/oder in Gruppen ansprechbar zu sein.

9. Beleuchtungsvorrichtung (100) nach einem der vorstehenden Ansprüche, wobei die mindestens eine erste Anordnung (10) von lichtemittierenden Elementen (10.1, 10.2, 10.3, 10.4, 10.5, 10.6) und/oder die mindestens eine zweite Anordnung (10) von lichtemittierenden Elementen (10.1, 10.2, 10.3, 10.4, 10.5, 10.6) einer Matrixanordnung der lichtemittierenden Elemente entspricht oder eine solche aufweist.

10. Beleuchtungsvorrichtung (100) nach einem der vorstehenden Ansprüche, wobei das optische Projektionselement (30) einer einzelnen Linse oder einem Linsensystem entspricht oder ein solches aufweist, die/das dazu angeordnet ist, Licht zu sammeln, das von sämtlichen lichtemittierenden Elemente der mindestens einen ersten und der mindestens einen zweite Anordnung (10) von lichtemittierenden Elementen (10.1, 10.2, 10.3, 10.4, 10.5, 10.6) emittiert wird.

11. Beleuchtungsvorrichtung (100) nach einem der Ansprüche 1 bis 10, wobei die lichtemittierenden Elemente (10.1, 10.2, 10.3, 10.4, 10.5, 10.6) jeweils Leuchtdioden, LEDs, entsprechen.

12. Beleuchtungsvorrichtung (100) nach einem der Ansprüche 2 bis 7, wobei die lichtemittierenden Elemente (10.1, 10.2, 10.3, 10.4, 10.5, 10.6) jeweils µ-LEDs entsprechen, und wobei die mindestens eine erste Anordnung von optischen Kollimationselementen (23.1, 23.2, 23.3, 23.4, 23.5, 23.6) und die mindestens eine zweite Anordnung von optischen Kollimationselementen (23.1, 23.2, 23.3, 23.4, 23.5, 23.6) jeweils entsprechenden Anordnungen von µ-Linsen entsprechen.

13. Beleuchtungssystem, **gekennzeichnet durch** eine Beleuchtungsvorrichtung (100) nach einem der Ansprüche 1 bis 12, das ferner eine Steuerung aufweist, die dazu ausgebildet ist, lichtemittierende Elemente der mindestens einen ersten Anordnung (10) von lichtemittierenden Elementen (10.1, 10.2, 10.3, 10.4, 10.5, 10.6) und/oder der mindestens einen zweite Anordnung (10) von lichtemittierenden Elementen (10.1, 10.2, 10.3, 10.4, 10.5, 10.6) einzeln zu steuern.

14. Fahrzeugscheinwerfer, **gekennzeichnet durch** eine Beleuchtungsvorrichtung (100) nach einem der Ansprüche 1 bis 12.

## Revendications

1. Dispositif d'éclairage (100) comprenant :
- au moins un premier agencement (10) d'éléments électroluminescents (10.1, 10.2, 10.3, 10.4, 10.5, 10.6) ;
- au moins un second agencement (10) d'éléments électroluminescents (10.1, 10.2, 10.3, 10.4, 10.5, 10.6) séparé spatialement de l'au moins un premier agencement (10) d'éléments électroluminescents (10.1, 10.2, 10.3, 10.4, 10.5, 10.6) ;
- au moins un premier élément optique grossissant (21.1) agencé en correspondance avec l'au moins un premier agencement (10) d'éléments électroluminescents (10.1, 10.2, 10.3, 10.4, 10.5, 10.6), l'au moins un premier élément optique grossissant (21.1) étant agencé et configuré pour la génération d'une image grossie de l'au moins un premier agencement (10) d'éléments électroluminescents (10.1, 10.2, 10.3, 10.4, 10.5, 10.6) ;
- au moins un second élément optique grossissant (21.2) agencé en correspondance avec l'au moins un second agencement (10) d'éléments électroluminescents (10.1, 10.2, 10.3, 10.4, 10.5, 10.6), l'au moins un second élément optique grossissant (21.2) étant agencé et configuré pour la génération d'une image grossie de l'au moins un second agencement (10) d'éléments électroluminescents (10.1, 10.2, 10.3, 10.4, 10.5, 10.6) ; et
- un élément de projection optique (30) agencé et configuré pour la génération d'une image combinée de l'image grossie de l'au moins un premier agencement (10) d'éléments électroluminescents (10.1, 10.2, 10.3, 10.4, 10.5, 10.6) et de l'image grossie de l'au moins un second agencement (10) d'éléments électroluminescents (10.1, 10.2, 10.3, 10.4, 10.5, 10.6) ; **caractérisé en ce que**
un foyer de l'au moins un élément de projection optique (30) est dans un plan défini par l'au moins un premier agencement (10) d'éléments électroluminescents (10.1, 10.2, 10.3, 10.4, 10.5, 10.6) et/ou par l'au moins un second agencement (10) d'éléments électroluminescents (10.1, 10.2, 10.3, 10.4, 10.5, 10.6).

2. Dispositif d'éclairage (100) selon la revendication 1, comprenant en outre :
- au moins un premier agencement d'éléments de collimation optiques (23.1, 23.2, 23.3, 23.4, 23.5, 23.6), dans lequel chaque élément de collimation optique de l'au moins un premier agencement d'éléments de collimation optiques (23.1, 23.2, 23.3, 23.4, 23.5, 23.6) est agencé en correspondance avec un élément électroluminescent correspondant de l'au moins un premier agencement (10) d'éléments électroluminescents (10.1, 10.2, 10.3, 10.4, 10.5, 10.6) pour la précollimation de lumière provenant de l'au moins premier agencement (10) d'éléments électroluminescents (10.1, 10.2, 10.3, 10.4, 10.5, 10.6) ; et
- au moins un second agencement d'éléments de collimation optiques (23.1, 23.2, 23.3, 23.4, 23.5, 23.6), dans lequel chaque élément de collimation optique de l'au moins un second agencement d'éléments de collimation optiques (23.1, 23.2, 23.3, 23.4, 23.5, 23.6) est agencé en correspondance avec un élément électroluminescent correspondant de l'au moins un second agencement (10) d'éléments électroluminescents (10.1, 10.2, 10.3, 10.4, 10.5, 10.6) pour la précollimation de lumière provenant de l'au moins second agencement (10) d'éléments électroluminescents (10.1, 10.2, 10.3, 10.4, 10.5, 10.6).

3. Dispositif d'éclairage (100) selon la revendication 2, dans lequel chaque élément de collimation optique (23.1, 23.2, 23.3, 23.4, 23.5, 23.6) correspond à ou comprend un élément lentille agencé pour collimater de la lumière émise à partir d'un élément électroluminescent correspondant.

4. Dispositif d'éclairage (100) selon l'une quelconque des revendications 2 ou 3, dans lequel l'au moins un premier élément optique grossissant (21.1), l'au moins un second élément optique grossissant (21.2) et les éléments de collimation optiques (23.1, 23.2, 23.3, 23.4, 23.5, 23.6) sont formés d'un seul tenant.

5. Dispositif d'éclairage (100) selon l'une quelconque des revendications 2 à 4, comprenant en outre un élément optique agencé dans un trajet de lumière émis à partir d'éléments électroluminescents du premier et du second agencement (10) d'éléments électroluminescents (10.1, 10.2, 10.3, 10.4, 10.5, 10.6) ;
dans lequel le premier élément optique grossissant (21.1) et le second élément optique grossissant (21.2) sont compris dans une face de l'élément optique opposée au premier et au second agencement (10) d'éléments électroluminescents (10.1, 10.2, 10.3, 10.4, 10.5, 10.6) ; et
dans lequel l'au moins un premier agencement d'éléments de collimation optiques (23.1, 23.2, 23.3, 23.4, 23.5, 23.6) et l'au moins un second agencement d'éléments de collimation optiques (23.1, 23.2, 23.3, 23.4, 23.5, 23.6) sont compris dans une face de l'élément optique faisant face au premier et au second agencement (10) d'éléments électroluminescents (10.1, 10.2, 10.3, 10.4, 10.5, 10.6).

6. Dispositif d'éclairage (100) selon l'une quelconque des revendications précédentes, dans lequel l'au moins un premier élément optique grossissant (21.1), l'au moins un second élément optique grossissant (21.2), un, plusieurs ou chacun des éléments de collimation optiques (23.1, 23.2, 23.3, 23.4, 23.5, 23.6) et/ou l'élément optique sont formés à partir de ou comprennent du verre ou du silicone.

7. Dispositif d'éclairage (100) selon l'une quelconque des revendications précédentes, dans lequel l'au moins un second agencement (10) d'éléments électroluminescents (10.1, 10.2, 10.3, 10.4, 10.5, 10.6) est séparé spatialement de l'au moins un premier agencement (10) d'éléments électroluminescents (10.1, 10.2, 10.3, 10.4, 10.5, 10.6) par un espace avec une largeur qui est plus grande qu'une largeur d'un espace séparant un premier élément électroluminescent de l'au moins un premier agencement et/ou de l'au moins un second agencement d'un second élément électroluminescent de l'au moins un premier agencement et/ou de l'au moins un second agencement agencé de manière adjacente au premier élément électroluminescent.

8. Dispositif d'éclairage (100) selon l'une quelconque des revendications précédentes, dans lequel les éléments électroluminescents de l'au moins un premier agencement (10) d'éléments électroluminescents (10.1, 10.2, 10.3, 10.4, 10.5, 10.6) et/ou de l'au moins un second agencement (10) d'éléments électroluminescents (10.1, 10.2, 10.3, 10.4, 10.5, 10.6) sont configurés pour pouvoir être adressés individuellement et/ou être adressés en groupe.

9. Dispositif d'éclairage (100) selon l'une quelconque des revendications précédentes, dans lequel l'au moins un premier agencement (10) d'éléments électroluminescents (10.1, 10.2, 10.3, 10.4, 10.5, 10.6) et/ou par l'au moins un second agencement (10) d'éléments électroluminescents (10.1, 10.2, 10.3, 10.4, 10.5, 10.6) correspond à ou comprend un agencement matriciel des éléments électrolum inescents.

10. Dispositif d'éclairage (100) selon l'une quelconque des revendications précédentes, dans lequel l'élément de projection optique (30) correspond à ou comprend une lentille unique ou un système de lentilles agencé pour collecter de la lumière émise à partir de tous les éléments électroluminescents de l'au moins un premier et de l'au moins un second agencement (10) d'éléments électroluminescents (10.1, 10.2, 10.3, 10.4, 10.5, 10.6).

11. Dispositif d'éclairage (100) selon l'une quelconque des revendications 1 à 10, dans lequel les éléments électroluminescents (10.1, 10.2, 10.3, 10.4, 10.5, 10.6) correspondent respectivement à des diodes électroluminescentes, DEL.

12. Dispositif d'éclairage (100) selon l'une quelconque des revendications 2 à 7, dans lequel les éléments électroluminescents (10.1, 10.2, 10.3, 10.4, 10.5, 10.6) correspondent respectivement à des µ-DEL et dans lequel l'au moins un premier agencement d'éléments de collimation optiques (23.1, 23.2, 23.3, 23.4, 23.5, 23.6) et l'au moins un second agencement d'éléments de collimation optiques (23.1, 23.2, 23.3, 23.4, 23.5, 23.6) correspondent respectivement à des agencements respectifs de p-lentilles.

13. Système d'éclairage **caractérisé par** un dispositif d'éclairage (100) selon l'une quelconque des revendications 1 à 12, comprenant en outre un dispositif de commande configuré pour la commande individuelle d'éléments électroluminescents de l'au moins un premier agencement (10) d'éléments électroluminescents (10.1, 10.2, 10.3, 10.4, 10.5, 10.6) et/ou de l'au moins un second agencement (10) d'éléments électroluminescents (10.1, 10.2, 10.3, 10.4, 10.5, 10.6).

14. Phare d'automobile **caractérisé par** un dispositif d'éclairage (100) selon l'une quelconque des revendications 1 à 12.
